# FASCICULE DE BREVET EUROPEEN

(11) **EP 0 583 278 B1**
(45) Date de publication et mention de la délivrance du brevet: **20.11.1996**
(21) Numéro de dépôt: 92909043.9
(22) Date de dépôt: 06.05.1992
(51) Int. Cl.: C04B 26/04, C08L 23/08, C08L 51/06

(54) **PROCEDE DE PRODUCTION DE REVETEMENTS DE SOLS OU DE MURS A BASE DE POLYMERES ET PRODUITS OBTENUS**
VERFAHREN ZUR HERSTELLUNG VON KUNSTSTOFFBELÄGERN FÜR BÖDEN UND WÄNDE UND DERART ERHALTENE PRODUKTE
METHOD FOR PRODUCING POLYMER-BASED FLOOR OR WALL COVERINGS, AND PRODUCTS THEREBY OBTAINED

(30) Priorité: 07.05.1991 BE 9100428
(43) Date de publication de la demande: 23.02.1994
(73) Titulaire: SOMMER S.A., L-9501 Wiltz (LU)
(72) Inventeur: BASTIN, Pierre, B-6600 Bastogne (BE); LACROIX, Pol, B-6600 Bastogne (BE)
(74) Mandataire: Van Malderen, Michel
(86) Numéro de dépôt international: BE9200014
(87) Numéro de publication internationale: WO9219562

(56) Documents cités:
- EP-A- 0 004 017
- EP-A- 0 054 424
- EP-A- 0 158 040
- EP-A- 0 212 575
- DE-A- 1 520 601
- DE-A- 3 306 776
- US-A- 4 614 680

## Description

### Objet de l'invention

La présente invention concerne un procédé de fabrication de produits résistant à l'abrasion et en particulier la production de revêtements de sols et de murs présentant des propriétés améliorées, notamment pour ce qui se rapporte à leur comportement au feu et les risques qu'ils présentent de dégager des fumées toxiques lors de leur combustion aussi bien lors d'un incendie accidentel que lors de leur incinération volontaire.

Elle a également pour objet les produits obtenus par de tels procédés.

### Problèmes auxquels s'adresse l'invention

Les produits de revêtements de sols ou de murs font largement appel actuellement à des compositions polymériques dérivées de chlorure de vinyle ou de composés contenant de l'azote tels que les polyuréthanes, les polyamides, ABS, etc.

La combustion accidentelle de tels produits au cours d'un incendie provoque d'importants dégagements gazeux, notamment chlorés (essentiellement constitués de HCl) ou azotés (cyanure) et/ou des fumées denses. Ceux-ci sont la cause primaire de nombreux décès lors d'incendies ou d'atteintes invalidantes aussi bien pour les victimes que pour le personnel d'intervention.

Le traitement des déchets par incinération volontaire entraîne également une pollution non négligeable, en dépit des précautions qui peuvent être prises telles que le tri préalable ou traitement des fumées de combustion.

L'utilisation de filtres ou d'autres dispositifs entraîne de toute façon un accroissement prohibitif des coûts de traitement des immondices, sans résoudre tous les problèmes de pollution.

Les combustions volontaires ou accidentelles de dépôts d'immondices entraînent un dégagement d'agents toxiques gazeux, en général plus important que celui d'un traitement de ces mêmes déchets par incinération à cause du caractère incontrôlé de la combustion qui de plus est généralement incomplète.

Il existe donc un besoin urgent de disposer d'une technique de réalisation de produits de revêtement de sols ou de murs présentant moins d'inconvénients que ceux existants.

On a déjà bien entendu proposé de nombreux "alliages", ou mélanges de polyoléfines avec d'autres polymères.

C'est ainsi qu'on connaît des mélanges de polyoléfines avec par exemple des copolymères éthylènes-ester acrylique (EP-A-0 054424, EP-A-0 004017 ou EP-0 212575).

L'application à l'extrusion-calandrage des polypropylènes n'est pas citée.

Ces produits ne permettent pas non plus de conférer aux polypropylènes destinés à servir de revêtements de sols ou de murs, des propriétés optimales souhaitées, tout particulièrement les propriétés de résistance à la griffure.

Dans la demande de brevet EP-A2-0 274 115 notamment, on décrit l'impact sur l'environnement de produits de revêtement de sols et de murs. La solution proposée repose sur l'utilisation d'une matière fondue comportant des matières minérales, homogène ou déposée sur une sous-couche de non-tissé de fibre de verre. Après impression, ce produit peut recevoir un vernis de finition.

Les possibilités décoratives sont bien entendu forcément limitées et le comportement physique des produits, en particulier leur résistance mécanique n'est pas nécessairement assuré dans tous les cas.

Dans la publication WO/90/06233, la Demanderesse a proposé un produit de revêtement de sols ou de murs à base de polypropylène qui implique le recours à des assemblages de feuilles.

Cette solution convient pour certaines applications mais elle a recours à une technique n'offrant pas la souplesse des techniques courantes pour la réalisation de produits en PVC, à savoir calandrage, extrusion ou enduction.

Il est en fait particulièrement difficile de travailler des matières plastiques qui allient à la fois les caractéristiques de mise en oeuvre et de produits finis semblables au PVC sans avoir les reproches que l'on porte généralement au PVC (p.ex. présence de chlore, de volatils,...).

On peut citer comme propriétés qui peuvent être recherchées pour un substitut adéquat du PVC:
- absence d'halogène
- non toxicité en cas de combustion
- bonne résistance à l'abrasion
- absence ou réduction notable d'éléments volatils dans le produit fini
- bon comportement au froid
- bon comportement pour des températures jusqu'à 70°C
- bonne résistance chimique
- bonne résistance photochimique
- possibilité d'introduction de charge dans la matière
- possibilité d'utiliser les cycles de transformations classiques du PVC (p.ex. calandrage, laminage, extrusion...)
- températures de mise en oeuvre pas trop élevée et proches de celles du PVC
- possibilité d'adapter à façon la souplesse du produit
- prix de revient peu élevé des matières premières mises en oeuvre et frais de transformation réduits jusqu'à l'obtention d'un produit fini acceptable comme revêtement de sols ou de murs.

### Buts de l'invention

La présente invention vise à obtenir un procédé de production de revêtements de sols, de murs ou d'autres produits tels que les tableau de bord présentant des propriétés thermomécaniques améliorées (et également de manière générale la réalisation de produits où le bon comportement à l'abrasion et/ou au feu sont indiqués) de type nouveau qui évite le recours à des polymères susceptibles de dégager des composés chlorés ou azotés et/ou des densités de fumées importantes.

Elle vise à apporter également des perfectionnements aux propriétés des produits obtenus et à leurs conditions de production.

Jusqu'à présent, la technique de production de revêtement de sols ou de murs par voie non textile a largement fait appel au PVC, par suite des larges facilités de mise en oeuvre de ce produit par diverses techniques, en particulier par enduction d'un plastisol sur une sous-couche de fibres de verre ou autre. Il convient de garder à l'esprit à cet égard que les utilisateurs se montrent particulièrement exigeants aussi bien pour ce qui concerne les propriétés physiques d'usage des produits (résistance à l'usure et résistance aux taches) qu'à l'aspect décoratif du produit (reproduction des motifs naturels ou non, brillance, relief ou structure, etc.).

On vise donc à titre complémentaire de mettre au point une technique permettant d'obtenir également par impression l'effet décoratif souhaité tout en assurant un comportement convenable à l'usage.

### Arrière-plan technologique de l'invention

Les produits à base polyoléfiniques constituent les produits semblant pouvoir convenir comme substituts du PVC.

On constate de manière générale pour les polyoléfines classiques que:
- lorsque la résistance à l'abrasion suffisante est obtenue, on a énormément perdu dans beaucoup d'autres caractéristiques;
- lorsqu'une certaine souplesse est obtenue, les tenues thermiques et résistances à l'abrasion sont particulièrement médiocres;
- lorsqu'on introduit des charges dans la matière, on arrive rapidement à de grandes altérations des autres propriétés.

On entend par polyoléfines classiques, par extrapolation les homo-, les co- ou les terpolymères qui ne sont pas modifiés par des groupements à haute polarité, tels que le PEBD, le polyéthylène linéaire à haute, basse ou très basse densité, le polymère type éthylène-acétate de vinyle (EVA), le copolymère type éthylène-acrylate de méthyle (EMA), le polymère éthylène-acrylate de butyle (EBA), le polymère éthylène-propylène (diène) (EP(D)M),...etc...

La Demanderesse s'est donc tournée vers des polymères modifiés, en particulier de polymères réalisés sur base de polymères modifiés par des groupements à haute polarité (par exemple par des acides et/ou anhydrides acides).

Ces produits se distinguent en général par le fait que les propriétés suivantes sont relativement satisfaisantes:
- comportement à l'abrasion
- grand choix de souplesse
- excellente tenue au froid
- bonne tenue thermomécanique
- points de "fusion" proches de 100°C
- absence d'halogène
- excellente résistance chimique
- excellente résistance photochimique
- toxicité réduite en cas de combustion.

Il faut noter encore que l'on peut augmenter les caractéristiques physico-chimiques en traitant une partie des groupements acides par exemple par des sels métalliques (bases de Lewis) pour obtenir des produits qualifiés d'ionomères.

Cependant, ces matières (qui ont un coût volumique de base compris entre 1,5 et 2 fois le prix du "PVC équivalent") ne sont malheureusement pas transformables suivant les cycles de transformation classique du PVC.

En particulier, les groupements à haute polarité leur confèrent des adhésivités beaucoup trop élevées sur les métaux (à titre d'exemple, "les matières fusionnées" dans un mélangeur interne seront pratiquement impossible à décoller industriellement des outils de production).

De plus, on sait qu'en général un taux de charge élevé (tels que des charges du type carbonate qui a l'avantage d'être économique), réduit malheureusement d'autres propriétés notamment l'abrasion, l'absorption d'humidité, etc...

La présente invention repose sur l'observation que les polymères modifiés par des groupements à haute polarité du type décrit qui sont chargées par des matières minérales, en particulier du type carbonate de calcium (craie) permettent de réaliser plusieurs des caractéristiques suivantes:
- augmentation des comportements à l'abrasion (résistance à la rayure)
- réduction conséquente du coût volumique du mélange
- transformation aisée des matières suivant les cycles classiques du PVC (calandrage, laminage, extrusion,...)
- maintien des taux d'absorption d'humidité modérés
- obtention des propriétés de résistance au feu égales ou supérieures au PVC (si souhaité).

De manière surprenante, on arrive donc à des coûts produit fini (matière + transformation) proches des PVC (plastifiés ou non) avec des performances égales ou supérieures aux formules PVC équivalentes et ce, sur des outils de transformation classique du PVC.

Dans certains cas, il a clairement été observé que l'augmentation de performances était si élevée qu'on peut substituer une partie du polymère à haute performance (coût d'environ 100 BEF/kg) par d'autres à coût plus faible, par exemple un polymère souple de type éthylène-acétate de vinyle (EVA) à environ 60 F/kg ou par exemple un polymère rigide de type polypropylène (PP) homo- ou copolymère.

Dans ce dernier cas, la tenue thermomécanique s'en trouve nettement améliorée.

Cette substitution peut par exemple être d'autant plus forte que le comportement du mélange polymère non substitué - charge atteint des performances inutilement élevées. Dans d'autres cas, cette substitution partielle peut avoir lieu afin d'apporter des caractéristiques spécifiques au produit fini (alliages polymères).

En effet, cette possibilité de choisir un mélange de polymères dont un ou plusieurs constituants auraient des affinités spécifiques pour des charges, permet d'envisager des procédés de fabrication d'alliages de polymères particulièrement aisés et pratiques.

Ces comportements sont d'autant plus inattendus qu'habituellement lorsqu'on cherche à résoudre le problème de la trop grande rigidité, il se fait que l'on perd au moins autant en résistance à l'abrasion que ce que l'on a gagné en souplesse lorsqu'on modifie la matrice rigide (PP ou PE par exemple) par un élément souple du type EPM, EVA ou autre...

Si dans un mélange de polymère rigide et souple, on introduit également de la charge, la moindre griffure laisse une traînée blanche très visible sur les revêtements de sols réalisés avec ces produits.

Un compromis satisfaisant est donc difficilement réalisable par ces techniques alors que celle de l'invention donne entière satisfaction à ces égards.

### Eléments caractéristiques de l'invention

L'invention propose un procédé de production de revêtements de sols ou de murs (ou de produits ayant un bon comportement à l'abrasion) à base de polymères ionomères caractérisé en ce qu'on met en oeuvre des polymères modifiés par des groupes comonomères à haute polarité, en mélange avec des charges minérales et en ce qu'on réalise des feuilles, des lés ou des dalles par les procédés classiques pour le PVC pour la fabrication de revêtements de sols ou de murs.

Il existe une gamme de produits polymères modifiés qui présente des propriétés particulièrement intéressantes pour leur emploi dans le cadre de l'invention.

Il s'agit essentiellement de produits copolymères ou terpolymères de l'éthylène avec des monomères présentant des fonctions acides telles que l'acide acrylique, l'acide méthacrylique, l'anhydride maléique ou autres.

Dans le cas particulier de copolymères éthylène-acide acrylique, on les appelle de manière abrégée "EAA".

Les propriétés de ces produits sont remarquables et sont entre autres:
- résistance mécanique
- transparence
- résistance à l'abrasion
- résistance aux chocs
- possibilité de choisir la souplesse voulue à façon
- résistance à basse température
- bonne tenue mécanique à des températures de l'ordre de 70°C
- point de "fusion" de l'ordre de 100°C, ce qui autorise des températures de transformation pas trop élevées
- prix très intéressant en comparaison avec les produits type polyester ou polyamide par exemple.

Les EAA modifiés appelés ionomères qui ont encore des performances à l'abrasion et en transparence fortement augmentées par rapport aux EAA classiques sont particulièrement intéressants pour une mise en oeuvre selon l'invention. Ces ionomères sont obtenus en neutralisant partiellement les sites acides, par exemple par des bases telles que l'hydroxyde de sodium ou par des sels d'acétate de zinc ou de sodium ce qui entraîne la formation de liaisons ioniques.

Ces ionomères sont légèrement plus chers que les EAA correspondants mais l'accroissement des propriétés qui est observé justifie largement leur utilisation en substitution totale ou partielle de l'EAA.

Lorsqu'ils sont mis en oeuvre conformément aux principes de l'invention, on observe que ces produits (ionomères) ne présentent plus l'inconvénient de coller très fortement à chaud sur toutes les parties métalliques (en particulier lors de la fusion du produit).

En conséquence, il devient possible de calandrer cette gamme de produits et il est envisageable de refroidir ces produits fondus sur des matières métalliques comme on le réalise après l'extrusion notamment.

En effet, puisque les adhésivités sur métal à chaud sont devenues moindres, l'extrudabilité et/ou la calandrabilité s'en trouvent fortement facilitées (pas de nécessité d'outillage particulier). Finalement, il est même envisageable de les extraire après passage dans un mélangeur interne du type Banbury.

De manière générale, en adaptant le taux de charge en fonction du type et de la nature de la partie polymérique intervenant dans la matière de départ, il est possible d'obtenir que:
- les propriétés physico-chimiques restent élevées,
- la processabilité se trouve grandement améliorée (en particulier, diminution de collage sur métaux),
- le coût volumique se trouve dilué,
- la résistance au feu se trouve grandement améliorée.

Ces polymères peuvent soit être achetés tels quels, soit modifiés par greffage de monomères à haute polarité sur des polymères (par exemple PP, PE, EPDM, EVA, etc.) lors de la mise en oeuvre des mélanges.

L'homme de l'art déterminera facilement en se basant sur les principes de l'invention mentionnés ci-dessus, la proportion de charges la plus adéquate en fonction de la nature de la transformation (calandrage, extrusion principalement) envisagée pour l'obtention d'un revêtement de sols ou de murs).

Le maintien des performances permet également de diluer le coût des polymères en choisissant un mélange dont un constituant n'a pas naturellement les caractéristiques exigées.

On peut par exemple diluer les polymères modifiés par des polymères non modifiés.

Il convient de noter que la modification d'un produit résistant à l'abrasion du type PP ou PE (qui sont intrinsèquement trop rigides) par un polymère souple du type EVA (éthylène-vinyl acétate) par exemple rend le mélange moins performant au point de vue de la résistance à l'abrasion et/ou rayure.

Dans le cas où l'on introduit également des charges dans le but de renforcer le mélange précité et/ou de faciliter sa mise en oeuvre et/ou de diminuer le coût du mélange, la résistance à la rayure est encore altérée, si l'on n'a pas recours à la technique de l'invention.

En revanche, l'utilisation conjointe d'un polymère modifié conforme à l'invention avec des charges minérales permet l'adjonction de polymères souples du type, par exemple, EVA, en présence ou en l'absence de polymères, en particulier de polyoléfines non modifiées, tout en satisfaisant à la fois aux exigences d'ouvrabilité lors de la mise en oeuvre et de résistance mécanique, en particulier de résistance à la rayure ou à la griffure.

De même on peut utiliser un mélange d'un polymère modifié conformément à l'invention avec un polymère rigide non modifié, par exemple du type polypropylène (PP), afin de modifier d'autres performances comme la tenue thermomécanique.

En utilisant les affinités particulières pour les charges de ces polymères modifiés, on peut envisager de créer des alliages de polymères. En effet, le mélange de deux polymères, dont un ne serait pas modifié avec de la charge, oblige le polymère modifié à se présenter préférentiellement autour de la charge. On peut donc modifier la configuration des phases.

Tout le champ d'application des alliages de polymères comportant des polymères modifiés se trouve ainsi ouvert pour la réalisation de revêtements de sols ou de murs ou toute autre application.

L'addition de charges du type du carbonate de calcium est possible en quantité pouvant aller, par exemple jusqu'à 85% en poids, en rendant le produit ouvrable sur des outils tels que les dispositifs classiques d'extrusion et de calandrage. Le produit ainsi obtenu présente un comportement à la griffure qui n'est pas altéré et cependant le prix se trouve fortement réduit grâce à la présence d'une charge bon marché.

En outre, la demanderesse a constaté que de manière inattendue la substitution de la craie par des charges ayant des indices de réfraction proches des résines de base (plus ou moins 1,5) telles que les Minex (Silicates d'aluminium, de potassium, de sodium) permet de maintenir une bonne transparence au produit fini, ce qui autorise des possibilités multiples d'assemblage et de décor.

De même, l'introduction de charges suffisamment fines, par exemple avec une granulométrie inférieure à 1000 Å, de préférence comprise entre 70 Å et 500 Å, telles que les dioxydes de titane ultra-fines, ou de silice pyrogéné telle que l'Aérosil®, permet également de maintenir la transparence des produits à transformer.

On pourrait également envisager de substituer tout ou partie de la charge bon marché du type carbonate de calcium par des charges ayant des propriétés spécifiques (par exemple hydrates d'alumine en vue de conférer une grande résistance au feu).

La technique de l'invention est compatible avec l'utilisation d'adjuvants classiques tels que charges pigmentaires ou colorants, charges renforçantes, agents de stabilisation, elle permet la réalisation de matériaux composites et l'utilisation de supports tels que voile de verre etc. ou le doublage, bien connus pour la réalisation de revêtements de sols ou de murs.

Le produit peut être également décoré de la manière habituelle et recevoir les traitements classiques de finition, en particulier l'application d'un vernis.

### Exemple

L'invention sera décrite à l'aide d'un exemple non limitatif illustrant les possibilités de mise en oeuvre de compositions de l'invention. Dans cet exemple, les proportions sont exprimées en "parties en poids".

On réalise un mélange de:

| | |
|---|---|
| ESCORENE UL 05540 | 25 |
| IOTEK 4080 | 75 |
| Craie industrie spéciale | 250 |
| IRGANOX 1010 | 0,3 |

L'Escorène est un EVA (polymère éthylène, acétate de vinyle à 40% d'acétate de vinyle et MFI de 55).

L'IOTEK est un ionomère assez souple de la firme EXXON (présentant un MFI de 14).

Le mélange se réalise aisément au mélangeur interne du type Banburry en se décollant aisément des pales après homogénéisation des matières qui sortent à une température de l'ordre de 125°C.

Le produit fini sous une épaisseur de 2 mm présente une dureté Shore D d'environ 62 et un indice d'indentation d'environ 20.

La matière se lamine aisément entre cylindre (mélangeur externe et/ou calandre) à des températures de cylindre de l'ordre de 100 ± 30°C par exemple.

Le tableau ci-dessous reprend des tests comparatifs effectués avec le produit de l'exemple et des produits réalisés en PVC selon l'état de la technique.

| | PVC | EXEMPLE |
|---|---|---|
| Salissement* | 4 | 2.5 |
| Griffure* | 4 | 2 |
| Fumée (chambre NBS) | | |
| Densité max. avec flamme | 458 | 45 |
| Densité max. sans flamme | 542 | 104 |
| Feu (panneau radiant) | M3 | M3 |

| | | |
|---|---|---|
| * Normes internes: 0: excellent 5: mauvais | | |

Dans cet exemple, il faut noter que lorsqu'on substitue une partie de la craie par des charges ignifuges, par exemple de l'hydrate d'alumine ou de l'hydroxyde de magnésium, la résistance au feu peut même devenir meilleure que celle du PVC correspondant.

## Revendications

1. Procédé de production de revêtements de sols ou de murs résistant à l'abrasion à base de polymères par les procédés classiques d'extrusion ou de calandrage caractérisé en ce qu'on met en oeuvre des polymères ionomères thermoplastiques (donc non-réticulés) modifiés par des groupes comonomères à haute polarité , en mélange avec des charges minérales et en ce qu'on réalise des feuilles, des lés ou des dalles.

2. Procédé de production selon la revendication 1 caractérisé en ce que les polymères ionomères modifiés sont des copolymères de polyoléfines tels que le PEBD, le polyéthylène linéaire à haute, basse ou très basse densité, le polypropylène homo- ou copolymère, le polymère type éthylène-acétate de vinyle (EVA), le polymère type éthylène-acrylate de méthyle (EMA), le polymère éthylène-acrylate de butyle (EBA), le VLDPE, le polymère éthylène propylène (EP(D)M) avec des monomères présentant des fonctions acides telles que l'acide acrylique ou l'acide méthacrylique et/ou des fonctions anhydrides telles que les anhydrides maléiques.

3. Procéde de production selon l'une quelconque des revendications précédentes caractérisé en ce que les polymères ionomères modifiés sont des ionomères obtenus,par exemple en neutralisant partiellement les sites acides par des bases telles que l'hydroxyde de sodium ou par des sels d'acétate de zinc ou de sodium.

4. Procédé de production selon l'une quelconque des revendications précédentes caractérisé en ce que les produits obtenus, après passage dans un mélangeur interne du type Banbury, sont extraits, calandrés et/ou refroidis sur des matières métalliques.

5. Procédé de production selon l'une quelconque des revendications précédentes caractérisé en ce que les produits obtenus, après passage dans une extrudeuse, sont extraits, calandrés et/ou refroidis sur des matières métalliques.

6. Procédé de production selon l'une quelconque des revendications précédentes caractérisé en ce que les polymères ionomères sont obtenus par greffage de monomères à haute polarité sur des polyoléfines lors de la mise en oeuvre des mélanges.

7. Procédé de production selon l'une quelconque des revendications précédentes caractérisé en ce que l'on substitue une partie de polymères ionomères modifiés par des polymères non modifiés.

8. Procédé de production selon l'une quelconque des revendications précédentes caractérisé en ce que l'on adjoint auxdits polymères ionomères modifiés des polymères souples non modifiés de type EVA (polymère d'éthylène et d'acétate de vinyle), EMA (polymère éthylène-acrylate de méthyle), ou EBA (polymère-éthylène-acrylate de butyle), EP(D)M en présence ou absence de polymères non modifiés.

9. Procédé de production selon l'une quelconque des revendications précédentes 1 à 6 caractérisé en ce que l'on adjoint auxdits polymères ionomères modifiés des polymères rigides et/ou servi-rigides non modifiés du type polyéthylène (PE) ou polypropylène (PP) en présence ou en l'absence de polymères non modifiées.

10. Procédé de production selon l'une quelconque des revendications précédentes caractérisée en ce que la charge minérale mise en oeuvre dans le mélange est du carbonate de calcium.

11. Procédé de production selon l'une quelconque des revendications précédentes 1 à 9 caractérisé en ce que la charge minérale mise en oeuvre dans le mélange possède un indice de réfraction proche des résines de base, telles que les Minex.

12. Procédé de production selon l'une quelconque des revendications précédentes caractérisé en ce que la charge minérale est une charge minérale ultrafine.

13. Procédé de production selon la revendication 12 caractérisé en ce que la granulométrie de la charge minérale est inférieure à 1000 Å.

14. Procédé de production selon la revendication 13 caractérisé en ce que la granulométrie de la charge minérale est comprise entre 70 et 500 Å.

15. Procédé de production selon l'une quelconque des revendications précédentes caractérisé en ce qu'on utilise un hydrate d'alumine ou hydroxyde de magnésium en substitution partielle ou totale au carbonate de calcium.

16. Procédé de production selon les revendications 1 à 15 caractérisé en ce que l'addition de charges du type du carbonate de calcium est réalisé en quantité pouvant aller jusqu'à 85% en poids, de préférence jusqu'à 75% en poids.

17. Produits résistant à l'abrasion et/ou au feu obtenus selon le procédé de l'une quelconque des revendications précédentes destinés au revêtement de sols ou de murs, à l'obtention d'autres produits caractérisés en ce qu'ils comportent des alliages de polymères.

## Patentansprüche

1. Verfahren zur Herstellung von abriebfesten Boden- oder Wandbelägen auf der Basis von Polymeren nach den herkömmlichen Extrusions- oder Kalandrierverfahren, dadurch gekennzeichnet, daß thermoplastische, ionomere (also nicht-vernetzte) Polymere, die durch comonomere Gruppen mit hoher Polarität modifiziert sind, gemischt mit mineralischen Füllstoffen, verwendet werden, und daß Folien, Bahnen oder Platten verwirklicht werden.

2. Herstellungsverfahren gemäß Anspruch 1, dadurch gekennzeichnet, daß die modifizierten, ionomeren Polymere Copolymere sind, die aus Polyolefinen, wie LDPE, lineares Polyethylen mit hoher, niedriger oder sehr niedriger Dichte, homo- oder copolymeres Polypropylen, Polymer vom Typ Ethylenvinylacetat (EVA), Polymer vom Typ Ethylenmethylacrylat (EMA), Ethylenbutylacrylat(EBA)-Polymer, VLDPE, Ethylenpropylenpolymer (EP(D)M), und Monomeren, die saure Gruppen, wie Acrylsäure oder Methacrylsäure und/oder Anhydridgruppen, wie Maleinsäureanhydride aufweisen, gebildet sind.

3. Herstellungsverfahren gemäß irgendeinem der vorhergehenden Ansprüche, dadurch gekennzeichnet, daß die modifizierten, ionomeren Polymere Ionomere sind, die beispielsweise erhalten werden, wenn die sauren Zentren durch Basen, wie Natriumhydroxid, oder durch Salze, wie Zink- oder Natriumacetat, teilweise neutralisiert werden.

4. Herstellungsverfahren gemäß irgendeinem der vorhergehenden Ansprüche, dadurch gekennzeichnet, daß die erhaltenen Produkte nach Einbringung in einen Innenmischer vom Typ Banbury extrahiert, kalandriert und/oder auf metallischen Materialien abgekühlt werden.

5. Herstellungsverfahren gemäß irgendeinem der vorhergehenden Ansprüche, dadurch gekennzeichnet, daß die erhaltenen Produkte nach Einbringung in einen Extruder extrahiert, kalandriert und/oder auf metallischen Materialien abgekühlt werden.

6. Herstellungsverfahren gemäß irgendeinem der vorhergehenden Ansprüche, dadurch gekennzeichnet, daß die ionomeren Polymere bei der Verwirklichung der Gemische durch Pfropfung von Monomeren mit hoher Polarität auf Polyolefine erhalten werden.

7. Herstellungsverfahren gemäß irgendeinem der vorhergehenden Ansprüche, dadurch gekennzeichnet, daß ein Teil der modifizierten, ionomeren Polymere durch nicht-modifizierte Polymere ersetzt wird.

8. Herstellungsverfahren gemäß irgendeinem der vorhergehenden Ansprüche, dadurch gekennzeichnet, daß zu dem modifizierten, ionomeren Polymeren nicht-modifizierte, nachgiebige Polymere vom Typ EVA (Ethylenvinylacetat), EMA (Ethylenmethylacrylat), EBA (Ethylenbutylacrylat) oder EP(D)M zugegeben werden, wobei nicht-modifizierte Polymere vorhanden oder nicht vorhanden sein können.

9. Herstellungsverfahren gemäß irgendeinem der vorhergehenden Ansprüche 1 bis 6, dadurch gekennzeichnet, daß zu den modifizierten, ionomeren Polymeren steife und/oder halbsteife, nicht-modifizierte Polymere vom Typ Polyethylen (PE) oder Polypropylen (PP) zugegeben werden, wobei nicht-modifizierte Polymere vorhanden oder nicht vorhanden sein können.

10. Herstellungsverfahren gemäß irgendeinem der vorhergehenden Ansprüche, dadurch gekennzeichnet, daß der dem Gemisch zugegebene, mineralische Füllstoff Kalziumkarbonat ist.

11. Herstellungsverfahren gemäß irgendeinem der vorhergehenden Ansprüche 1 bis 9, dadurch gekennzeichnet, daß der dem Gemisch zugegebene, mineralische Füllstoff einen Brechungsindex hat, der nahe bei demjenigen der Basisharze, wie den Minex liegt.

12. Herstellungsverfahren gemäß irgendeinem der vorhergehenden Ansprüche, dadurch gekennzeichnet, daß der mineralische Füllstoff ein ultrafeiner mineralischer Füllstoff ist.

13. Herstellungsverfahren gemäß Anspruch 12, dadurch gekennzeichnet, daß die Korngröße des mineralischen Füllstoffs kleiner als 1000 Å ist.

14. Herstellungsverfahren gemäß Anspruch 13, dadurch gekennzeichnet, daß die Korngröße des mineralischen Füllstoffs zwischen 70 und 500 Å liegt.

15. Herstellungsverfahren gemäß irgendeinem der vorhergehenden Ansprüche, dadurch gekennzeichnet, daß ein Tonerdehydrat oder Magnesiumhydroxid zur teilweisen oder vollständigen Ersetzung des Kalziumkarbonats verwendet wird.

16. Herstellungsverfahren gemäß den Ansprüchen 1 bis 15, dadurch gekennzeichnet, daß die Zugabe von Füllstoffen vom Typ Kalziumkarbonat in einer Menge erfolgt, die bis zu 85 Gewichtsprozent, vorzugsweise bis zu 75 Gewichtsprozent gehen kann.

17. Abriebfeste und/oder feuerfeste Produkte, die gemäß dem Verfahren von irgendeinem der vorhergehenden Ansprüche erhalten werden, und zum Belegen von Böden oder Wänden, sowie zur Herstellung weiterer Produkte bestimmt sind, dadurch gekennzeichnet, daß sie Polymerlegierungen umfassen.

## Claims

1. Producing process for polymer-based abrasion-resistant ground or wall coatings through conventional extrusion or calendering methods, characterized in that ionomer thermoplastic (thus uncrosslinked) polymers are provided, which are modified by high polarity comonomer groups, in admixture with inorganic fillers, and in that sheets, webs and plates are are produced.

2. Producing process according to claim 1, characterized in that said modified ionomer polymers are polyolefin copolymers such as PEBD, linear high, low or very low density polyethylene, polypropylene homo- or copolymer, ethylene-vinyl acetate type polymer (EVA), ethylene-methyl acrylate polymer (EMA), ethylene-butyl acrylate polymer (EBA), VLDPE, ethylene-propylene polymer (EP(D)M) with monomers having acid functions such as acrylic acid or methacrylic acid and/or anhydrid functions such as maleic anhydrids.

3. Producing process according to any of preceding claims, characterized in that said modified ionomer polymers are ionomers obtained, for example by neutralizing partly the acid sites with bases such as sodium hydroxide or with zinc or sodium acetate salts.

4. Producing process according to any of preceding claims, characterized in that the products obtained after passing through a Banbury type internal mixer are extracted, calendered and/or cooled on metal materials.

5. Producing process according to any of preceding claims, characterized in that the products obtained after passing through an extruder are extracted, calendered and/or cooled on metal materials.

6. Producing process according to any of preceding claims, characterized in that said ionomer polymers are obtained by grafting high polarity monomers to polyolefins when carrying out the mixtures.

7. Producing process according to any of preceding claims, characterized in that part of the modified ionomer polymers is substituted by unmodified polymers.

8. Producing process according to any of preceding claims, characterized in that there are added to said modified ionomer polymers unmodified soft polymers of EVA (ethylene-vinyl acetate polymer), EMA (ethylene-methyl acrylate polymer) or EBA (ethylene-butyl acrylate polymer) and EP(D)M types, in the presence or absence of unmodified polymers.

9. Producing process according to any of preceding claims 1 to 6, characterized in that there are added to said modified ionomer polymers unmodified hard and/or semi-hard polymers of polyethylene (PE) or polypropylene (PP) types in the presence or absence of unmodified polymers.

10. Producing process according to any of preceding claims, characterized in that the inorganic filler used in the mixture is calcium carbonate.

11. Producing process according to any of preceding claims 1 to 9, charaterized in that the inorganic filler used in the mixture has a refraction index close to base resins, such as the Minex ones.

12. Producing process according to any of preceding claims, characterized in that the inorganic filler is an ultrafine inorganic filler.

13. Producing process according to claim 12, characterized in that the grain size of the inorganic filler is lower than 1000 Angstroms.

14. Producing process according to claim 13, characterized in that the grain size of the inorganic filler is comprised between 70 and 500 Angstroms.

15. Producing process according to any of preceding claims, characterized in that an alumina hydrate or magnesium hydroxide is used in partial or complete substitution for the calcium carbonate.

16. Producing process according to claims 1 to 15, characterized in that the addition of calcium carbonate type fillers is carried out in a quantity up to 85% by weight, preferably up to 75% by weight.

17. Abrasion and/or fire-resistant products according to the process of any of preceding claims for ground or wall coatings or for other products, characterized in that they comprise polymer alloys.
